# EUROPEAN PATENT APPLICATION

(11) **EP 4 807 423 A1**
(43) Date of publication of application: **16.09.2026**
(21) Application number: 24883574.6
(22) Date of filing: 06.09.2024
(51) Int. Cl.: G02B 21/06, G02B 7/28

(54) **MICROSCOPE AND OBSERVATION METHOD**

(30) Priority: 08.11.2023 JP 2023190631
(71) Applicant: Hitachi High-Tech Corporation, Minato-ku Tokyo 105-6409 (JP)
(72) Inventor: KUROKAWA Takahiro, Tokyo 100-8280 (JP)
(74) Representative: Strehl & Partner mbB
(86) International application number: PCT/JP2024/032028
(87) International publication number: WO 2025/100080

(57) **Abstract**

An object of the invention is to provide a microscope with an autofocus mechanism that achieves both high-speed focus tracking and focus accuracy. The microscope according to the invention moves a position of a collimator lens such that light passing through an objective lens is focused on a surface of a cover slip, and detects reflected light from a sample as a focus error signal indicating a deviation amount of a focal point of the light passing through the objective lens from a focus target surface (see FIG. 1).

## Description

### Technical Field

The present invention relates to a microscope.

### Background Art

Pathology is one field of medicine for diagnosing diseases by examining tissues, organs excised by surgery, body fluids, and the like with a microscope. In recent years, due to the spread of digital images, in particular, the development and spread of whole slide imaging (WSI) technology, traditional pathology has been developed into digital pathology. The WSI is a system in which an image of an entire glass slide specimen is captured in advance using a high-magnification microscope, the captured image is taken into a computer as a digital image, and the digital image is displayed on a monitor device and observed. An imaging device of a digital image is called a WSI scanner.

In many applications of digital pathology, a scanning process of a specimen is a main bottleneck in a workflow, and improvement in throughput (reduction in scanning time) of the scanning process is required.

In a microscope of a WSI scanner, autofocus control is performed to automatically adjust a focus of an objective lens to an optimum position in order to obtain a clear image of an object. An autofocus method for a WSI scanner is roughly classified into two types of a reflection type and an image-based type from the viewpoint of a focus detection method. The reflection type is a method for detecting a height of a reference surface on a sample by receiving reflected light from the sample using a dedicated light source. The image-based type is a method for detecting a focus height based on an image quality evaluation value (contrast or the like) of a captured image.

In an astigmatic method, which is one type of a reflective focus detection method, a focus detection target surface is irradiated with a focused laser beam, and a focus shift (defocus) is detected by receiving reflected light. A detection system in this method includes a focusing lens, a cylindrical lens, and a detector, and detects the defocus by utilizing a change in a light spot shape on the detector according to a defocus amount. Since the astigmatic method uses a light source and a detection system dedicated to focus detection, processing of a captured image as in the image-based focus detection method is unnecessary. In addition, since the method can be implemented by simple signal processing, the method is capable of high-speed focus tracking and is effective in shortening a scanning time of the WSI scanner.

PTL 1 listed below discloses an example of an autofocus device using an astigmatic method. In order to "provide an autofocus device and a microscope device capable of reducing a time required to focus an objective lens on an object", PTL 1 discloses a technique in which "an autofocus device 20 includes a drive unit 25 that moves an objective lens 11 in an optical axis direction, a detection unit 28 that detects whether an object is disposed at a detection position DP shifted by a predetermined reference distance from a focal plane of the objective lens 11, and a control unit 29 that drives the drive unit 25 to move the objective lens 11 by the reference distance and perform control to focus the objective lens 11 on the object when the detection unit 28 detects that the object is disposed at the detection position DP" (see Abstract).

### Citation List

### Patent Literature

PTL 1: JP2022-137838A

### Summary of Invention

### Technical Problem

One aspect of a glass slide specimen to be an imaging object of a WSI scanner is obtained by sealing a tissue section placed on a glass slide with a cover slip using a mounting medium. In order to cause the focus detection method based on the astigmatic method to function ideally, that is, with high focus detection sensitivity, it is necessary to focus and emit a laser light beam for focus detection (hereinafter, referred to as a focus detection beam) on a focus target surface. When the astigmatic method is applied to autofocus of a glass slide specimen, the specimen is irradiated with laser light by using an objective lens of a microscope, and a focus target surface is a main reflection surface of light to be irradiated, that is, a surface of a cover slip.

However, when a tissue section is imaged, since there is a constraint condition that the position (height) of the objective lens is adjusted to be focused on the tissue section, it is not always possible to focus and emit the focus detection beam on the surface of the cover slip which is the focus target surface. In many cases, the focus detection beam is a collimated beam, and a focal point by the objective lens is a position of the tissue section. Therefore, the beam diverges on the surface of the cover slip, and focus detection sensitivity, that is, a change amount of a focus error signal with respect to a defocus amount is significantly reduced as compared with an ideal case. A decrease in focus detection sensitivity leads to a decrease in focus accuracy.

An object of the invention is to solve the above problems and to provide a microscope with an autofocus mechanism that achieves both high-speed focus tracking and focus accuracy.

### Solution to Problem

A microscope according to the invention moves a position of a collimator lens such that light passing through an objective lens is focused on a surface of a cover slip, and detects reflected light from a sample as a focus error signal indicating a deviation amount of a focal point of the light passing through the objective lens from a focus target surface.

### Advantageous Effects of Invention

According to the invention, it is possible to provide a microscope with an autofocus mechanism that achieves both high-speed focus tracking and focus accuracy. Other problems, configurations, advantages, and the like of the invention will become apparent from the following description of embodiments.

### Brief Description of Drawings

[FIG. 1] FIG. 1 shows a configuration example of an imaging optical system provided in a microscope according to Embodiment 1.
[FIG. 2] FIG. 2 is a diagram showing a principle of detecting a focus error, that is, a deviation amount of a focal point of an illumination light beam from a focus target surface using an astigmatic method.
[FIG. 3] FIG. 3 is a diagram schematically showing a focused state of a focus detection beam 139.
[FIG. 4] FIG. 4 is a diagram showing a light spot shape on a photodetector 153 when the state of FIG. 3 is set to defocus = 0 and a position of an objective lens 121 is changed with reference to the state.
[FIG. 5] FIG. 5 is a graph plotting a relationship between the defocus and a focus error signal (FES) when the state of FIG. 3 is set to defocus = 0.
[FIG. 6] FIG. 6 is a diagram schematically showing another form of the focused state of the focus detection beam 139.
[FIG. 7] FIG. 7 is a diagram showing a light spot shape on a photodetector 153 when the state of FIG. 6 is set to defocus = 0 and a position of the objective lens 121 is changed with reference to the state.
[FIG. 8] FIG. 8 is a graph plotting the relationship between the defocus and the focus error signal (FES) when the state of FIG. 6 is set to defocus = 0.
[FIG. 9] FIG. 9 is a diagram schematically showing a focused state of the focus detection beam 139.
[FIG. 10] FIG. 10 is a diagram showing a light spot shape on a photodetector 153 when the state of FIG. 9 is set to defocus = 0 and a position of the objective lens 121 is changed with reference to the state.
[FIG. 11] FIG. 11 is a graph plotting a relationship between defocus and the focus error signal (FES) when the state of FIG. 9 is set to defocus = 0.
[FIG. 12] FIG. 12 is a flowchart showing a procedure for performing autofocus control by adjusting a position of a collimator lens 132 according to any glass slide specimen.
[FIG. 13] FIG. 13 is a conceptual diagram showing a principle that a focus error occurs due to unevenness in a cover slip thickness.
[FIG. 14] FIG. 14 is a top view showing an example of arrangement of focus learning points.
[FIG. 15] FIG. 15 is a flowchart showing a procedure for creating a focus error signal correction value map and performing autofocus control using a focus error signal corrected by the data.
[FIG. 16] FIG. 16 is a flowchart showing a procedure for creating a collimator lens position map and performing autofocus control while dynamically controlling a position of the collimator lens 132 based on the data.
[FIG. 17] FIG. 17 is a diagram showing a configuration example of an imaging optical system included in a microscope according to Embodiment 6.

### Description of Embodiments

### <Embodiment 1: Basic Configuration (Beam Focusing Position Adjustment)>

### <Configuration of Entire Optical System>

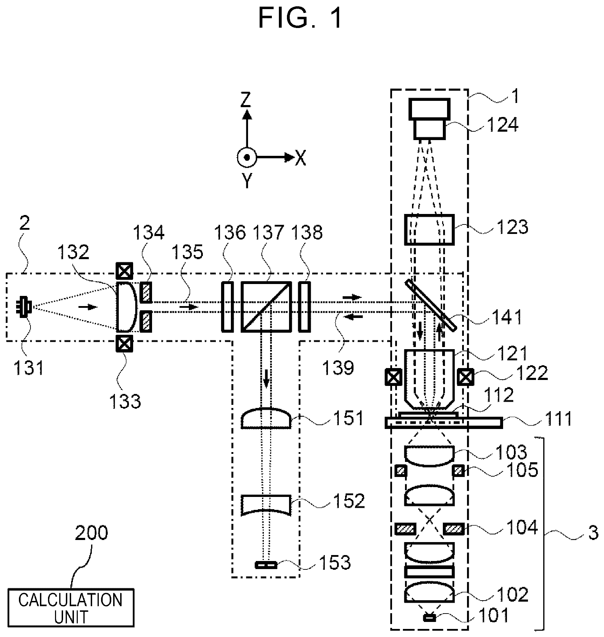

FIG. 1 shows a configuration example of an imaging optical system provided in a microscope according to Embodiment 1 of the invention. The imaging optical system includes a microscope optical system 1 for capturing an image of a specimen, a focus detection optical system 2 for detecting a focus error signal for performing autofocus, and a calculation unit 200. In the coordinate axes, an optical axis direction of the microscope optical system 1 is defined as a Z axis, a direction horizontal to a paper surface among in-plane directions of a glass slide specimen described later is defined as an X axis, and a direction perpendicular to the paper surface is defined as a Y axis. The calculation unit 200 controls each unit of the microscope and performs a flowchart described later.

### <Configuration of Microscope>

The configuration of the microscope optical system 1 is classified into a transmission type bright field microscope. An illumination optical system 3 for illuminating an imaging object includes a light emitting diode 101 as a light source, a collector lens 102, and a condenser lens 103. The collector lens 102 forms a real image of the light source on the condenser lens 103, and the condenser lens 103 forms a real image of the collector lens 102 on a sample surface. That is, an illumination method for the illumination optical system 3 is Köhler illumination, and uniformly illuminates the sample surface. The illumination optical system 3 includes a field stop 104 and an aperture stop 105. An illumination range on the sample surface is adjusted by the field stop 104, and a numerical aperture of the illumination light is adjusted by the aperture stop 105.

The glass slide specimen as an imaging object is obtained by sealing a tissue section placed on a glass slide with a cover slip 112 using a mounting medium.

The objective lens 121 and an imaging lens 123 constitute an infinity correction optical system, and form an image of a tissue section in the glass slide specimen on a sensor surface of an imaging element 124. An objective lens position adjustment mechanism 122 adjusts the position of the objective lens 121 in the optical axis direction.

### <Configuration of Focus Detection Optical System>

The focus detection optical system 2 detects a focus error based on an astigmatic method. A laser diode 131 as a light source emits infrared laser light that is linearly polarized light having a wavelength of 785 nm. The emitted laser light is collimated by the collimator lens 132 to become a substantially collimated beam, and then a beam diameter is limited to a predetermined size by an aperture 134 to become a focus detection beam 135. The focus detection beam 135 passes through a half-wave plate 136 and is incident on a polarizing beam splitter 137.

The polarizing beam splitter 137 has a function of transmitting substantially 100% p-polarized light (polarized light having an electric field component parallel to an incident surface) incident on a splitting surface and reflecting substantially 100% s-polarized light (polarized light having an electric field component perpendicular to the incident surface). By adjusting a rotation angle of the half-wave plate 136 around an optical axis with respect to the focus detection beam 135, a polarization direction of the light transmitted through the half-wave plate 136 can be freely changed, and an intensity ratio between the transmitted light and the reflected light in the polarizing beam splitter 137 can be freely adjusted. In the present embodiment, the rotation angle of the half-wave plate 136 is adjusted such that the light transmitted through the half-wave plate 136 becomes p-polarized light, and the focus detection beam 135 is transmitted through the polarizing beam splitter 137 by approximately 100%.

The focus detection beam 135 passing through the polarizing beam splitter 137 by approximately 100% is converted into circularly polarized light by passing through a quarter-wave plate 138, which has its fast axis tilted 45 degrees with respect to the polarization direction of the incident beam, and is then guided to the microscope optical system 1. The focus detection beam 135 is coupled to an optical path of the microscope optical system 1 by a dichroic filter 141 disposed in the optical path of the microscope optical system 1. Subsequently, the focus detection beam 135 is focused by the objective lens 121, and is applied to a glass slide specimen as an imaging object.

A beam reflected by the surface of the cover slip 112 of the glass slide specimen (hereinafter, referred to as a reflected light beam 139 or a focus detection beam 139) is returned to a substantially collimated beam again by the objective lens 121 and returned to the linearly polarized light by the quarter-wave plate 138. At this time, since a rotation direction of the circularly polarized light is reversed by the reflection on the surface of the cover slip 112, the direction of the linearly polarized light becomes the s-polarized light rotated by 90 degrees from forward light. Therefore, the reflected light beam 139 that is the s-polarized light transmitted through the quarter-wave plate 138 is substantially reflected by the polarizing beam splitter 137 by approximately 100% and directed toward a focusing lens 151.

The reflected light beam 139 is incident on a cylindrical lens 152 while being focused by the focusing lens 151. The cylindrical lens 152 is disposed with its cylindrical axis inclined by 45 degrees with respect to the Y axis in an XY plane. The reflected light beam 139 is transmitted through the cylindrical lens 152 to give astigmatism and is incident on the photodetector 153. The photodetector 153 is a quadrant photodiode, and is disposed such that division lines thereof are along the X-axis and the Y-axis. A focus error signal (FES) described later is generated based on an output signal of each of elements (A, B, C, and D) of the photodetector 153.

### <Principle of Focus Detection by Astigmatic Method>

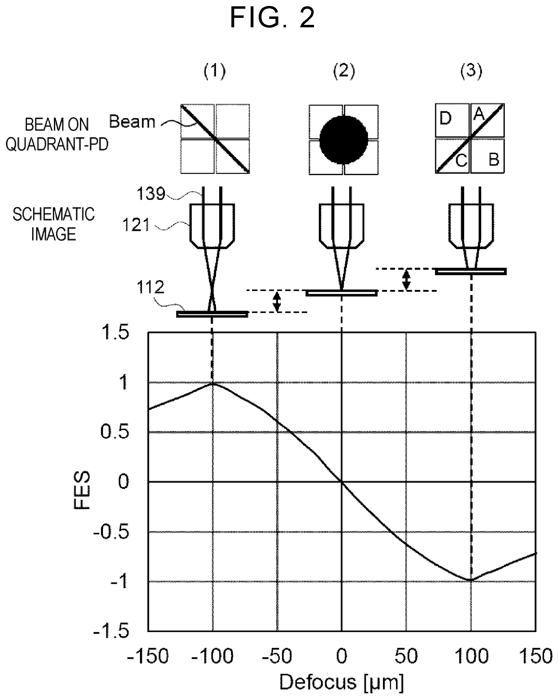

FIG. 2 is a diagram showing a principle of detecting a focus error, that is, a deviation amount of a focal point of an illumination light beam from a focus target surface using an astigmatic method.

The reflected light beam 139 is converged by the focusing lens 151 and is given astigmatism by the cylindrical lens 152. The cylindrical lens 152 functions as a lens only in a single direction, and a direction orthogonal thereto is the same as that of a parallel plate and does not function as a lens. Therefore, since a focal length is different in each direction, astigmatism occurs. In the focus detection optical system 2 according to the present embodiment, a focal length of a beam viewed from a cross section having no lens action of the cylindrical lens 152 is substantially the same as a focal length (fdet) of the focusing lens 151. On the other hand, a beam viewed from a cross section having a lens action is not focused there, and an elongated line image (focal line) is obtained.

The beam viewed from the cross section of the cylindrical lens 152 having the lens action converges to a focal length of a combined lens of the focusing lens 151 and the cylindrical lens 152, whereas the beam viewed from the cross section having no lens action is not focused there and becomes a focal line. A focal length fcomb of the combined lens is expressed by Equation 1. fdet is a focal length of the focusing lens 151, fcyl is the focal length of the cylindrical lens 152, and Dlens is an interval between the focusing lens 151 and the cylindrical lens 152. The beam has a circular shape between the two focal lines.
[Math. 1] $\frac{1}{{f}_{comb}} = \frac{1}{{f}_{det}} + \frac{1}{{f}_{cyl}} - \frac{{D}_{lens}}{{f}_{det} {f}_{cyl}}$

When the defocus is measured using the astigmatic method, a center of the photodetector 153 is aligned with a position where the reflected light beam from a focal plane of the objective lens 121 is circular, as shown in (2) of FIG. 2. The photodetector 153 includes a quadrant photodiode, and an optical signal detected by each of the elements is converted into an electric signal. A signal processing circuit calculates a focus error signal FES from the four outputs A, B, C, and D of the photodetector 153 using Equation 2.
[Math. 2] $FES = \frac{\left(A+C\right) - \left(B+D\right)}{A + B + C + D}$

When a height of the surface of the cover slip 112, which is the focus target surface, coincides with the focal plane (focal length) of the objective lens 121, FES = 0. As shown in (1) of FIG. 2, when the focus target surface is lower than the focal plane, the beam is obliquely elongated to the left, and FES > 0. Meanwhile, as shown in (3) of FIG. 2, when the focus target surface is higher than the focal plane, the beam is obliquely elongated to the right, and FES < 0.

The sign of FES depends on an installation angle with an optical axis direction of the cylindrical lens 152 as a rotation center. In the present embodiment, the optical axis direction is set as the rotation center, and is inclined by 45 degrees with respect to a vertical direction. Here, the optical axis direction is defined as a direction in which light propagates. In this way, a deviation amount from the surface of the cover slip is detected based on the focus error signal.

### <Focus Detection Sensitivity>

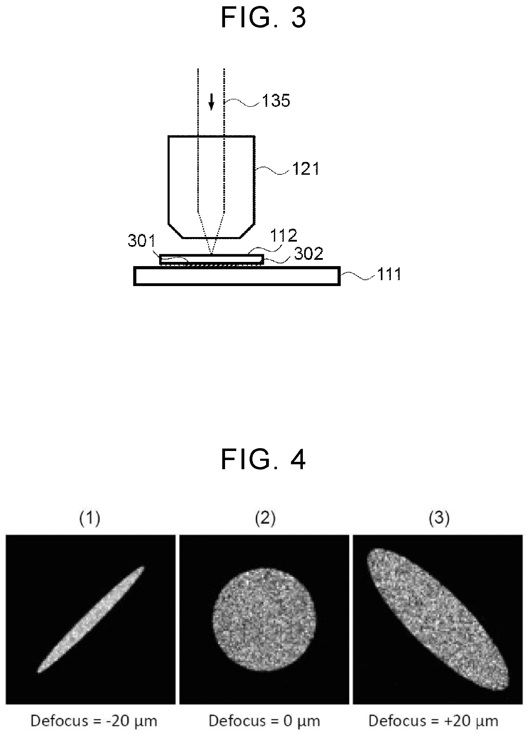

FIG. 3 is a diagram schematically showing one form of a focused state of the focus detection beam 139. A mounting medium 302 is used to seal the tissue section 301. In this state, the focus detection beam 139 is a collimated beam, and the position of the objective lens 121 is adjusted such that the focus detection beam 139 is focused on the surface of the cover slip 112. That is, this is one form in which the astigmatic method ideally functions.

FIG. 4 is a diagram showing a light spot shape on the photodetector 153 when the state of FIG. 3 is set to defocus = 0 and the position of the objective lens 121 is changed with reference to the state. (1), (2), and (3) of FIG. 4 show the cases in which the defocus is -20, 0, and +20 µm, respectively. A size of the photodetector was 0.5 mm × 0.5 mm. A plot range is 0.5 mm × 0.5 mm, which is the same as the size of the photodetector. As described above, a spot shape on the photodetector 153 changes in an oblique direction with respect to a change in defocus.

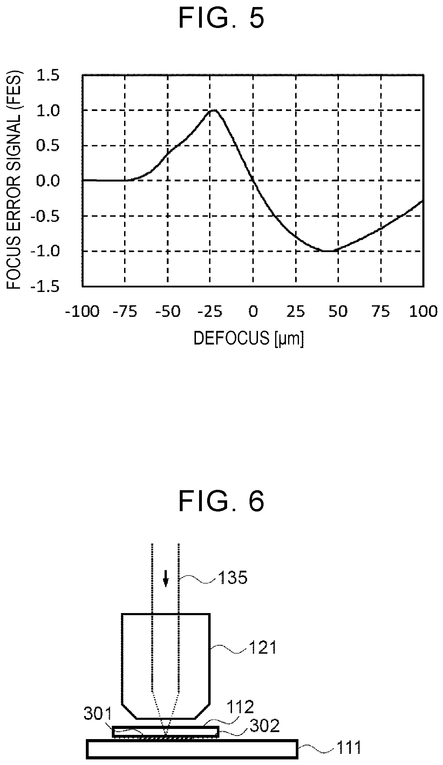

FIG. 5 is a graph plotting the relationship between the defocus and the focus error signal (FES) when the state of FIG. 3 is set to defocus = 0. As described above, the focus error signal linearly changes with respect to the defocus between a positive peak and a negative peak, indicating that the astigmatic method functions ideally.

However, in the state shown in FIG. 3, since the objective lens 121 is focused on the surface of the cover slip 112, an original purpose of the WSI scanner for obtaining a clear image of the tissue section 301 cannot be achieved.

FIG. 6 is a diagram schematically showing another form of the focused state of the focus detection beam 139. The focus detection beam 139 is a collimated beam as in the case of FIG. 3. Meanwhile, the position of the objective lens 121 is adjusted to focus on the tissue section 301. That is, this indicates an actual operation state of the WSI scanner. However, in this state, the focus detection beam 139 converges on the tissue section 301 and diverges on the surface of the cover slip 112 which is the focus target surface.

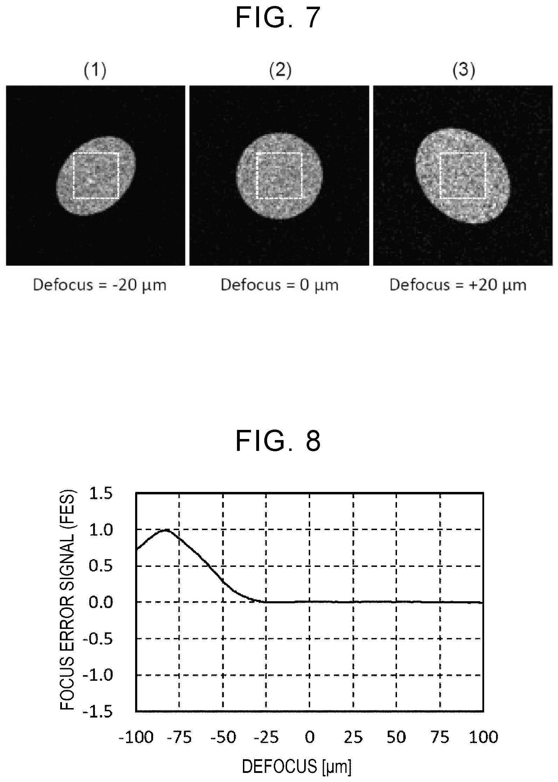

FIG. 7 is a diagram showing a light spot shape on the photodetector 153 when the state of FIG. 6 is set to defocus = 0 and the position of the objective lens 121 is changed with reference to the state. (1), (2), and (3) of FIG. 7 show the cases in which the defocus is -20, 0, and +20 µm, respectively. Unlike FIG. 3, the plot range is 2.0 mm × 2.0 mm. In FIG. 3, the size (0.5 mm × 0.5 mm) of the photodetector is indicated by a white broken line. As described above, in the state of FIG. 6, a light spot on the photodetector 153 spreads widely and protrudes from the photodetector 153. Accordingly, since the focus error signal hardly changes with respect to the change in defocus, it is difficult to detect the defocus. Even if a photodetector having a size capable of receiving the entire light spot is used, a change in the light spot shape with respect to the change in the defocus is significantly small as compared with the ideal state of FIG. 3.

FIG. 8 is a graph plotting the relationship between the defocus and the focus error signal (FES) when the state of FIG. 6 is set to defocus = 0. As described above, the focus error signal hardly changes near defocus = 0, that is, the focus detection sensitivity is significantly reduced.

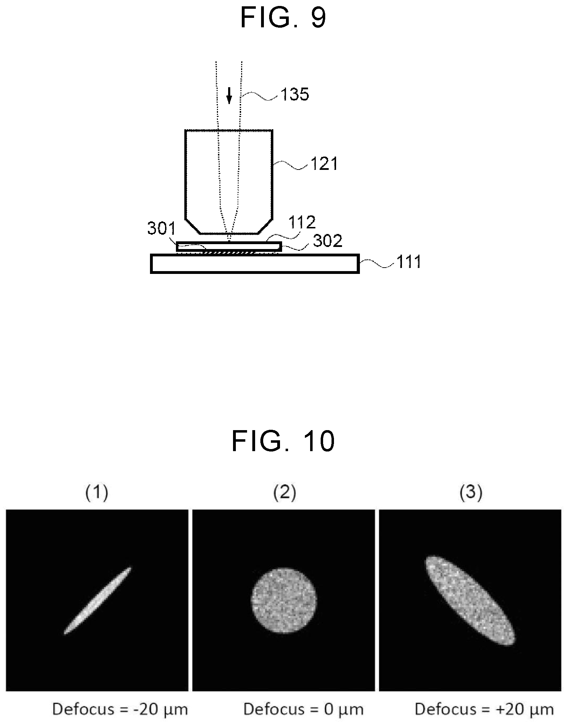

FIG. 9 is a diagram schematically showing a focused state of the focus detection beam 139 in the present embodiment. The position of the objective lens 121 is adjusted to focus on the tissue section 301. That is, it is an actual operation state of the WSI scanner. However, unlike the case of FIG. 3, the focus detection beam 139 is incident on the objective lens 121 while being weakly focused, and is focused on the surface of the cover slip 112, which is the focus target surface. With this configuration, it is possible to ideally function focus detection by the astigmatic method while disposing the objective lens 121 at a position suitable for imaging.

FIG. 10 is a diagram showing the light spot shapes on the photodetector 153 when the state of FIG. 9 is set to defocus = 0 and the position of the objective lens 121 is changed with reference to the state. (1), (2), and (3) of FIG. 10 show the cases in which the defocus is -20, 0, and +20 µm, respectively. A plot range is 0.5 mm × 0.5 mm, which is the same as the size of the photodetector. In this way, in the state of FIG. 9, the change in the light spot shape with respect to the defocus is large, which is equivalent to the change in the light spot shape (FIG. 4) in the configuration of FIG. 3.

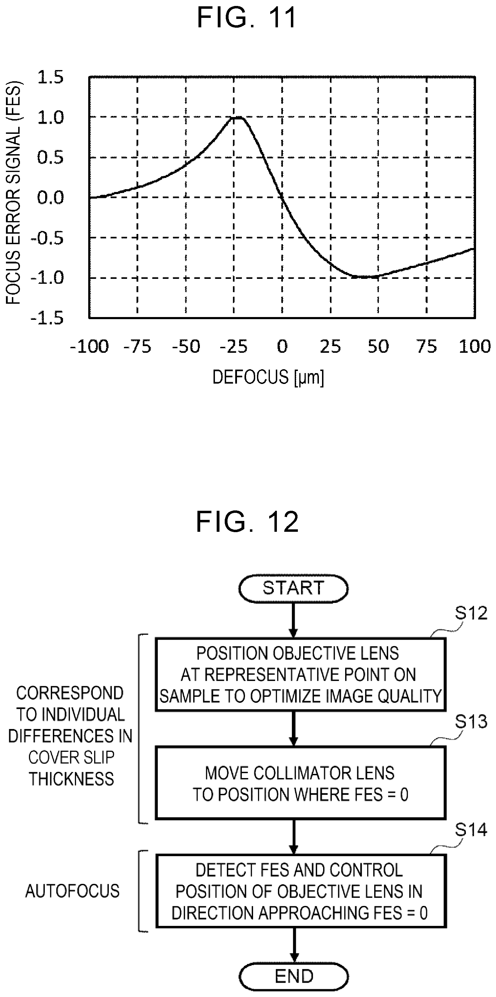

FIG. 11 is a graph plotting the relationship between the defocus and the focus error signal (FES) when the state of FIG. 9 is set to defocus = 0. In this way, an slope in a linear region between positive and negative peaks of the focus error signal, that is, the focus detection sensitivity, is equivalent to the focus error signal in the ideal state of FIG. 3 (FIG. 5). This indicates that the focus detection by the astigmatic method ideally functions by the configuration of the present embodiment.

### <Adjustment of Beam Focal Point>

The focused state of the focus detection beam 139 shown in FIG. 9, that is, the state in which the focus detection beam 139 is focused on the surface of the cover slip 112 in the state in which the focus of the objective lens 121 is adjusted to the tissue section 301 is implemented by the following method.

The position of the collimator lens 132 shown in FIG. 1 is based on the position where the laser light transmitted through the collimator lens 132 becomes a collimated beam. The collimator lens position adjustment mechanism 133 moves the position of the collimator lens 132 in a beam traveling direction along the optical axis. Accordingly, the laser light transmitted through the collimator lens 132 becomes a beam traveling while being weakly focused. The weakly focused focus detection beam 135 is focused by the objective lens 121, and the position of the focal point is in front of the focal plane (focal length) of the objective lens 121.

The collimator lens position adjustment mechanism 133 adjusts the position of the collimator lens 132 such that the focus detection beam 135 is just focused on the surface of the cover slip 112.

### <Embodiment 2: Beam Focused Point Position Adjustment Method>

### <Adjustment of Focus Error Signal to Approach Zero>

Embodiment 2 of the invention relates to a procedure for adjusting the collimator lens 132 to a position suitable for focus detection based on an astigmatic method. The configuration of the microscope is the same as that of Embodiment 1. First, a setting procedure of the focus detection optical system 2 will be described. The photodetector 153 in the focus detection optical system 2 of FIG. 1 is disposed at a position where the focus error signal becomes zero when the focus detection beam 135 is just focused on the surface of the cover slip 112. An example of a procedure for disposing the photodetector 153 at such a position will be described below.

First, the position of the objective lens 121 is adjusted such that the focal plane of the objective lens 121 coincides with the surface of the cover slip 112. This state is achieved by, for example, adjusting the position of the objective lens 121 such that minute scratches present on the surface of the cover slip 112, minute dust adhering to the surface, and the like can be clearly seen while observing a captured image obtained by the microscope optical system 1. Next, the photodetector 153 is disposed at a position where the focus error signal becomes zero when the focus detection beam 135 is a collimated beam. That is, the photodetector 153 is disposed at a position where the reflected light beam 139 is circular. By the above procedure, the focus detection optical system 2 is set in a state in which the focus error signal becomes zero when the focus detection beam 135 is just focused on the surface of the cover slip 112.

FIG. 12 is a flowchart showing a procedure for performing autofocus control by adjusting the position of the collimator lens 132 according to any glass slide specimen. The focus detection optical system 2 is set in advance at a position where the focus error signal becomes zero when the focus detection beam 135 is just focused on the surface of the cover slip 112. The flowchart (the same applies to the following flowchart) is performed by the calculation unit 200. Hereinafter, steps in FIG. 12 will be described.

Step S12: A focus of the objective lens 121 is adjusted to the tissue section at any representative point (XY coordinates) of the glass slide specimen, preferably at a portion where the tissue section to be imaged is present. That is, the objective lens 121 is moved to a position where the captured image of the tissue section is the clearest.

Step S13: The collimator lens position adjustment mechanism 133 moves the collimator lens 132 to a position where the focus error signal becomes zero. By this step, the focus detection beam 135 is focused on the surface of the cover slip 112 at the representative point.

Step S14: This step is an autofocus control step. The focus error signal is detected, and feedback control for moving the objective lens 121 in a direction in which the focus error signal approaches zero is repeatedly performed also at coordinates other than the representative point of S12.

The above series of procedures is performed each time the glass slide specimen is replaced. Accordingly, even if a height of the surface of the cover slip changes due to variations in the thickness of the glass slide or the cover slip in each of the glass slide specimens, the focus detection beam 135 can always be focused on the surface of the cover slip 112, and high focus detection sensitivity can be ensured.

### <Embodiment 3: Focus Error Signal Correction Value Map>

An astigmatic method is a method for detecting a focus error with respect to the surface of the cover slip by receiving reflected light from the surface of the cover slip, and in autofocus using the method, the position of the objective lens is controlled with reference to the position of the surface of the cover slip. However, since a commercially available cover slip has an unevenness in thickness, that is, a fluctuation in thickness depending on a place in one cover slip, a distance from a surface of the cover slip to a tissue section fluctuates depending on a portion to be imaged, and the fluctuation causes a focus error. Embodiment 3 of the invention relates to a method for reducing a focus error due to the unevenness in the cover slip thickness in the glass slide specimen. The configuration of the microscope is the same as that of Embodiment 1.

### <Focus Error Due to Unevenness in Thickness of Cover Slip>

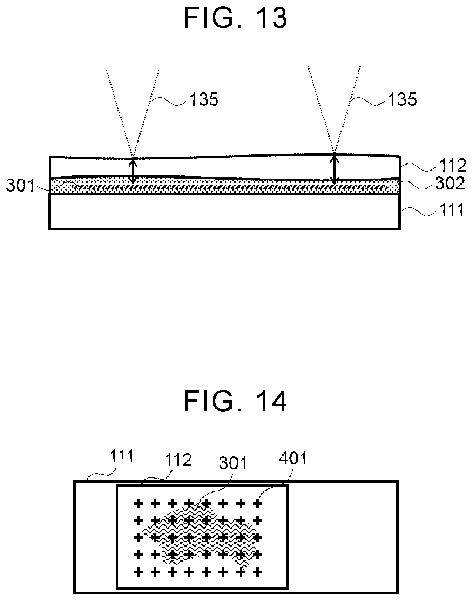

FIG. 13 is a conceptual diagram showing a principle that a focus error occurs due to the unevenness in the cover slip thickness. FIG. 13 corresponds to a side cross-sectional view of the cover slip. The autofocus control controls the position of the objective lens 121 to follow a change in the height of the surface of the cover slip 112. However, when the thickness of the cover slip 112 varies depending on the portion to be imaged (XY coordinates), the distance from the surface of the cover slip 112 to the tissue section 301 to be imaged changes, and a change amount becomes a focus error.

### <Creation of Map and Arrangement of Focus Learning Points>

FIG. 14 is a top view showing an example of arrangement of focus learning points. An imaging range is set in a range including the entire tissue section 301 to be imaged, and focus learning points 401 are arranged at predetermined intervals in the imaging range. The arrangement interval of the focus learning points 401 is desirably less than 1/2 which is a reciprocal of a maximum spatial frequency (minimum spatial period) of the thickness fluctuation of the cover slip.

### <Interpolation>

A correction value used for correcting the focus error signal can be set for each XY coordinate of the surface of the tissue section 301. Data describing the correction value is referred to as a focus error signal correction value map. One form of the focus error signal correction value map is a form of a lookup table in which a correspondence relationship between the XY coordinates and a focus error signal correction value is stored as an array. The focus error signal correction value in the XY coordinates between the focus learning points not included in the map is calculated by interpolation processing using data of a plurality of focus learning points in the vicinity thereof. As another form, a mathematical expression for calculating the focus error signal correction value as a function of the XY coordinates may be used.

### <Flowchart>

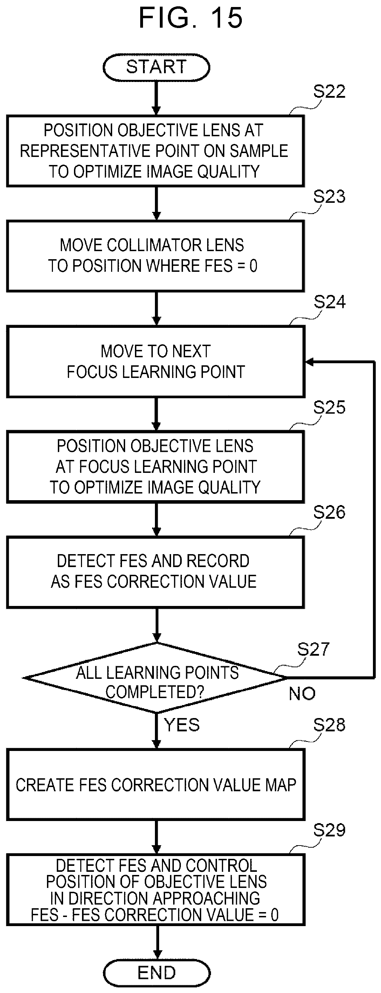

FIG. 15 is a flowchart showing a procedure for creating the focus error signal correction value map and performing the autofocus control using the focus error signal corrected by the data. Hereinafter, steps in FIG. 15 will be described.

Step S22: A focus of the objective lens 121 is adjusted to the tissue section at any representative point (XY coordinates) of the glass slide specimen, preferably at a portion where the tissue section to be imaged is present. That is, the objective lens 121 is moved to a position where the captured image of the tissue section is the clearest.

Step S23: The collimator lens position adjustment mechanism 133 moves the collimator lens 132 to a position where the focus error signal becomes zero. By this step, the focus detection beam 135 is focused on the surface of the cover slip 112 at the representative point.

Step S24: The collimator lens 132 is moved to a position (XY coordinates) of the next focus learning point.

Step S25: The focus of the objective lens 121 is adjusted to the tissue section at the focus learning point. That is, the objective lens 121 is moved to a position where the captured image of the tissue section is the clearest.

Step S26: A focus error signal is detected and recorded as a focus error signal correction value.

Step S27: It is determined whether the steps S25 and S26 are performed for all the focus learning points. If YES, the processing proceeds to the next step S28. If NO, the processing returns to step S24.

Step S28: A focus error signal correction value map indicating a relationship between the XY coordinates and the focus error signal correction value at the coordinates is created.

Step S29: This step is an autofocus control step. The focus error signal is detected, the focus error signal is corrected by subtracting the focus error signal correction value at the current XY coordinates from the detected focus error signal, and feedback control for moving the objective lens 121 in a direction in which the corrected focus error signal approaches zero is repeatedly performed.

### <Embodiment 4: Alternative Map>

### <Flowchart>

In Embodiment 4 of the invention, a collimator lens position map created from a viewpoint different from the focus error signal correction value map described in Embodiment 3 will be described. The configuration of the microscope is the same as that of Embodiment 1.

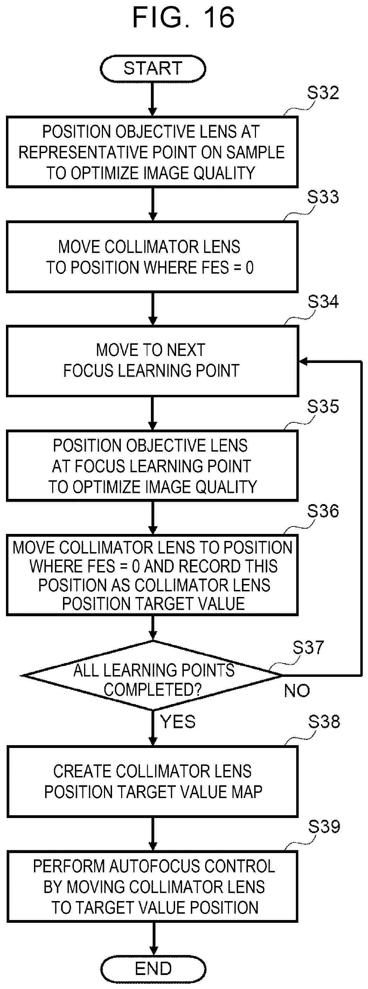

FIG. 16 is a flowchart showing a procedure for creating a collimator lens position map and performing autofocus control while dynamically controlling the position of the collimator lens 132 based on the data. Hereinafter, steps in FIG. 16 will be described.

Step S32: A focus of the objective lens 121 is adjusted to the tissue section at any representative point (XY coordinates) of the glass slide specimen, preferably at a portion where the tissue section to be imaged is present. That is, the objective lens 121 is moved to a position where the captured image of the tissue section is the clearest.

Step S33: The collimator lens position adjustment mechanism 133 moves the collimator lens 132 to a position where the focus error signal becomes zero. By this step, the focus detection beam 135 is focused on the surface of the cover slip 112 at the representative point.

Step S34: The collimator lens 132 is moved to a position (XY coordinates) of the next focus learning point.

Step S35: The focus of the objective lens 121 is adjusted to the tissue section at the focus learning point. That is, the objective lens 121 is moved to a position where the captured image of the tissue section is the clearest.

Step S36: The collimator lens 132 is moved to a position where the focus error signal becomes zero, and this position is recorded as a collimator lens position target value.

Step S37: It is determined whether the steps S35 and S36 are performed for all the focus learning points. If YES, the processing proceeds to the next step S38. If NO, the processing returns to step S34.

Step S38: A collimator lens position target value map indicating a relationship between the XY coordinates and the collimator lens position target value at the coordinates is created.

Step S39: This step is an autofocus control step. The control of the position of the objective lens 121 is the same as in the above embodiment. That is, a focus error signal is detected, and feedback control for moving the objective lens 121 in a direction in which the focus error signal approaches zero is repeatedly performed.

In Embodiment 4, the position of the collimator lens 132 is feedforward controlled to a target position corresponding to the XY coordinates. The target position is extracted from the collimator lens position target value map. By adjusting the position of the collimator lens 132, a light beam can be emitted in a more ideal state.

### <Embodiment 5: Map Creation Dedicated Device>

Embodiment 5 of the invention relates to another form of creating the focus error signal correction value map in Embodiment 3 and the collimator lens position target value map in Embodiment 4. These maps may be created by another device (map creation device) having the same configuration as the microscope according to the above embodiment. For example, an observation step can be smoothly performed by the map creation device creating a map of a slide to be observed next by the microscope in advance. The map creation device does not necessarily have the completely same configuration as the microscope according to the invention as long as it has a configuration capable of creating the map described in Embodiments 3 and 4.

### <Embodiment 6: Dual Astigmatic Method>

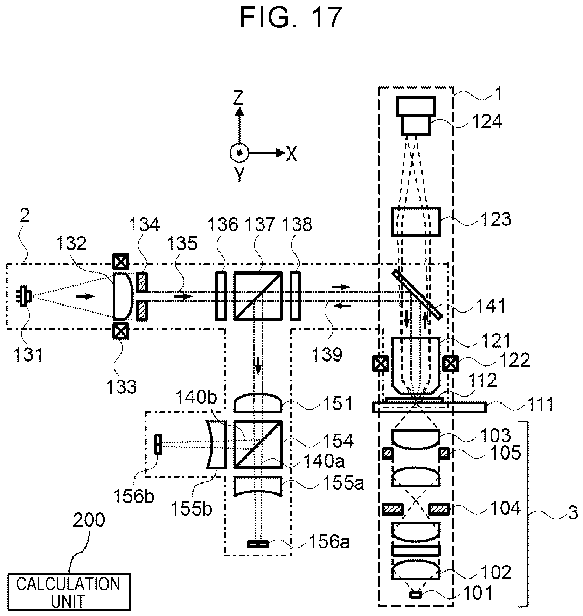

FIG. 17 is a diagram showing a configuration example of an imaging optical system included in a microscope according to Embodiment 6. Embodiment 6 relates to another configuration of the focus detection optical system. Other configurations are the same as those of the above embodiments.

The reflected light beam 139 that is the s-polarized light transmitted through the quarter-wave plate 138 is substantially reflected by the polarizing beam splitter 137 by approximately 100% and directed toward the focusing lens 151. The reflected light beam 139 travels toward the non-polarizing beam splitter 154 while being focused by the focusing lens 151. The non-polarizing beam splitter has a function of reflecting and transmitting light incident on the splitting surface at a predetermined ratio regardless of the polarization direction. The non-polarizing beam splitter 154 in the present embodiment reflects and transmits incident light at a ratio of 50:50. Cross-sectional intensity distributions of the first reflected light beam 140a transmitted through the non-polarizing beam splitter 154 and the second reflected light beam 140b reflected therefrom are in a line-symmetric relationship with each other.

The first reflected light beam 140a transmitted through the non-polarizing beam splitter 154 is incident on a first cylindrical lens 155a while being converged. The first cylindrical lens 155a is disposed with its cylindrical axis inclined by 45 degrees with respect to the Y axis in an XY plane. The first reflected light beam 140a is transmitted through the first cylindrical lens 155a to give astigmatism and is incident on a first photodetector 156a. The first photodetector 156a is a quadrant photodiode, and is disposed such that division lines thereof are along the X-axis and the Y-axis. From output signals of elements (A₁, B₁, C₁, and D₁) of the first photodetector 156a, a first focus error signal (FES₁) is generated using Equation 3.
[Math. 3] ${FES}_{1} = \frac{\left({A}_{1}+{C}_{1}\right) - \left({B}_{1}+{D}_{1}\right)}{{A}_{1} + {B}_{1} + {C}_{1} + {D}_{1}}$

Meanwhile, the second reflected light beam 140b reflected by the non-polarizing beam splitter 154 is incident on a second cylindrical lens 155b while being converged. The second cylindrical lens 155b is disposed with its cylindrical axis inclined by 45 degrees with respect to the Y axis in a YZ plane. The second reflected light beam 140b is transmitted through the second cylindrical lens 155b to give astigmatism and is incident on a second photodetector 156b. The second photodetector 156b is a quadrant photodiode, and is disposed such that the division lines thereof are along the Y-axis and the Z-axis. From output signals of the elements (A₂, B₂, C₂, and D₂) of the second photodetector 156b, a second focus error signal (FES₂) is generated using Equation 4.
[Math. 4] ${FES}_{2} = \frac{\left({A}_{2}+{C}_{2}\right) - \left({B}_{2}+{D}_{2}\right)}{{A}_{2} + {B}_{2} + {C}_{2} + {D}_{2}}$

The focus error signal FES in Embodiment 6 is calculated as an average value of the first focus error signal FES₁ and the second focus error signal FES₂. That is, the average value is calculated using Equation 5.
[Math. 5] $FES = \frac{{FES}_{1} + {FES}_{2}}{2}$

With the above configuration, when the disturbance of the light spot shape on a photodetector surface occurs due to the minute unevenness of the focus target surface, disturbance components of the light spot shapes in the first photodetector 156a and the second photodetector 156b have a line-symmetric relationship with each other. Therefore, a fluctuation component of the focus error signal due to the disturbance of the light spot shape is canceled by the calculation of the average value of the focus error signals FES₁ and FES₂ generated from the first photodetector 156a and the second photodetector 156b. Therefore, according to the present embodiment, it is possible to acquire a stable focus error signal even if the focus target surface has minute unevenness.

### <Regarding Modification of Invention>

The invention is not limited to the embodiments described above and includes various modifications. For example, a part of a configuration of a certain embodiment can be replaced with a configuration of another embodiment, and a configuration of another embodiment can be added to a configuration according to a certain embodiment, without departing from the gist of the invention. In addition, another configuration can be added to, deleted from, or replaced with a part of a configuration of each embodiment.

The microscope according to the invention is not limited to a transmission type bright field microscope, and may be, for example, a fluorescence microscope. The illumination method may be an epi-illumination method. The specimen to be imaged is not limited to the tissue section. Each embodiment of the invention can also be applied to a glass slide specimen using blood or body fluid. A wavelength of the laser light of the focus detection optical system is not limited to 785 nm. It is preferable to select a wavelength range other than the wavelength range (visible range) of an illumination light source of the microscope. The illumination light source of the microscope may not be an LED. A tungsten lamp, a halogen lamp, a xenon lamp, or the like may be used.

As described in the above embodiments, since real-time focus detection by the astigmatic method and correction of a focus error signal by a map are combined, the invention has an advantage that it is not affected by a temperature drift of a sample height occurring after map creation, as compared with a method in the related art of controlling a position of an objective lens using only a focus map.

In the above embodiments, the calculation unit 200 can be implemented by hardware such as a circuit device where a function thereof is provided, or can also be implemented by a calculation device such as a central processing unit (CPU) executing software where the function is provided.

### Reference Signs List

1: microscope optical system
2: focus detection optical system
3: illumination optical system
101: light emitting diode
102: collector lens
103: condenser lens
104: field stop
105: aperture stop
111: glass slide
112: cover slip
121: objective lens
122: objective lens position adjustment mechanism
123: imaging lens
124: imaging element
131: laser diode
132: collimator lens
133: collimator lens position adjustment mechanism
134: aperture
135: focus detection beam
136: half-wave plate
137: polarizing beam splitter
138: quarter-wave plate
139: reflected light beam
140a: first reflected light beam
140b: second reflected light beam
141: dichroic filter
151: focusing lens
152: cylindrical lens
153: photodetector
154: non-polarizing beam splitter
155a: first cylindrical lens
155b: second cylindrical lens
156a: first photodetector
156b: second photodetector
200: calculation unit
301: tissue section
302: mounting medium
401: focus learning point

## Claims

1. A microscope for observing a sample covered with a cover slip, the microscope comprising:
a collimator lens configured to convert light emitted from a light source into substantially collimated light;
an objective lens configured to focus light transmitted through the collimator lens on the sample;
a position adjustment mechanism configured to move a position of the collimator lens; and
a detector configured to detect reflected light from the sample, wherein
the position adjustment mechanism moves the position of the collimator lens such that the light transmitted through the objective lens is focused on a surface of the cover slip, and
the detector detects the reflected light as a focus error signal indicating a deviation amount of a focal point of the light transmitted through the objective lens from a focus target surface.

2. The microscope according to claim 1, wherein
the position adjustment mechanism moves the position of the collimator lens such that the light passing through the objective lens is focused on the surface of the cover slip in a state in which the objective lens is adjusted in advance to focus on the sample.

3. The microscope according to claim 1, wherein
the position adjustment mechanism moves the position of the collimator lens in a direction in which the focus error signal approaches 0.

4. The microscope according to claim 1, further comprising:
a calculation unit configured to acquire a correction value map in which a correction value used to correct a fluctuation of the focus error signal due to a thickness of the cover slip is described for each of plane positions on the surface of the cover slip, wherein
the calculation unit corrects the focus error signal using the correction value at each of the plane positions described in the correction value map, and
the calculation unit controls a position of the objective lens in a direction in which the corrected focus error signal approaches 0.

5. The microscope according to claim 4, wherein
the position adjustment mechanism moves the collimator lens to a position where the focus error signal is 0,
the calculation unit acquires the focus error signal after focusing the objective lens on the sample for each of the plane positions, and
the calculation unit records the focus error signal acquired for each of the plane positions as the correction value.

6. The microscope according to claim 1, further comprising:
a calculation unit configured to acquire a position map in which a target position of the collimator lens at which the focus error signal is 0 is described for each of plane positions on the surface of the cover slip, wherein
the calculation unit controls the position of the collimator lens to the target position at each of the plane positions described in the position map.

7. The microscope according to claim 6, wherein
the position adjustment mechanism moves the collimator lens to a position where the focus error signal is 0,
the calculation unit moves the collimator lens to a position where the focus error signal is 0 after focusing the objective lens on the sample for each of the plane positions, and
the calculation unit records the position of the collimator lens where the focus error signal is 0 for each of the plane positions as the target position.

8. The microscope according to claim 4, further comprising:
a map creation device configured to create the correction value map in which the correction value used to correct the fluctuation of the focus error signal due to the thickness of the cover slip is described for each of the plane positions on the surface of the cover slip; and
a calculation unit configured to correct the focus error signal using the correction value map, wherein
the calculation unit corrects the focus error signal using the correction value at each of the plane positions described in the correction value map, and
the calculation unit controls the position of the objective lens in a direction in which the corrected focus error signal approaches 0.

9. The microscope according to claim 6, further comprising:
a map creation device configured to create the position map in which the target position of the collimator lens at which the focus error signal is 0 is described for each of the plane positions on the surface of the cover slip; and
a calculation unit configured to control the position of the collimator lens using the position map, wherein
the calculation unit controls the position of the collimator lens to the target position at each of the plane positions described in the position map.

10. The microscope according to claim 1, further comprising:
a light splitting element configured to guide the reflected light to each of a first detection optical system and a second detection optical system, wherein
the light splitting element guides the reflected light transmitted through the light splitting element to the first detection optical system and guides the reflected light reflected from the light splitting element to the second detection optical system, and
an intensity distribution of the reflected light guided to the first detection optical system and an intensity distribution of the reflected light guided to the second detection optical system are inverted in line symmetry with each other.

11. The microscope according to claim 1, wherein
the detector detects the focus error signal based on an astigmatic method.

12. The microscope according to claim 1, wherein
the detector includes at least four divided detection elements, and
each of the detection elements detects the reflected light and outputs a detection result.

13. An observation method for observing a sample covered with a cover slip, the method comprising:
a step of converting light emitted from a light source into substantially collimated light by a collimator lens;
a step of focusing light transmitted through the collimator lens with respect to the sample by an objective lens;
a step of moving a position of the collimator lens; and
a step of detecting reflected light from the sample, wherein
in the step of moving the position, the position of the collimator lens is moved so that the light transmitted through the objective lens is focused on a surface of the cover slip, and
in the step of detecting the reflected light, the reflected light is detected as a focus error signal indicating a deviation amount of a focal point of the light transmitted through the objective lens from a focus target surface.
